# EUROPEAN PATENT APPLICATION

(11) **EP 2 058 695 A1**
(43) Date of publication of application: **13.05.2009**
(21) Application number: 08167835.1
(22) Date of filing: 29.10.2008
(51) Int. Cl.: G02F 1/1333

(54) **Process of manufacturing a display unit**

(30) Priority: 30.10.2007 JP 2007282436
(71) Applicant: Fujitsu Limited, Kawasaki-shi, Kanagawa 211-8588 (JP)
(72) Inventor: Ushimaru, Akihiko, Kanagawa 211-8588 (JP); Mishima, Kazuhisa, Kanagawa 211-8588 (JP); Yamanishi, Hirokazu, Kanagawa 211-8588 (JP)
(74) Representative: Weihs, Bruno Konrad

(57) **Abstract**

Grooves (15,16), instead of perforated lines, are formed in one surface of a flexible substrate (11,12). Two substrates are then combined and an edge a substrate (11), is removed along the groove (15) to expose electrode terminals (14) on the other substrate (12), thereby avoiding cracks when producing a display unit. Grooves are formed with a laser (35), a cutting blade (43), or a grinder (53).

## Description

### BACKGROUND OF THE INVENTION

### 1. Field of the Invention

An aspect of the invention relates to a method for manufacturing a display unit and a display unit that is manufactured using the method.

### 2. Description of the Related Art

In a process of manufacturing a flexible thin display unit in which a flexible film substrate is used, conductive film patterns are bonded together so that the conductive film patterns oppose each other and sandwich a display element.

In this case, a perforated line 62 (a broken line that includes a plurality of through-holes that extend in the thickness direction of a film) is formed on a film 61 in advance, a part of the film 61 is cut out along the perforated line 62 to expose electrode terminals 64 disposed at an outer edge of a conductive film pattern 63, and a flexible printed circuit (FPC) connector 65 is bonded to the exposed electrode terminals 64, as shown in Japanese Laid-open Patent Publication No. 59-37524 (Fig. 8A, Fig. 8B, Fig. 8C, and Fig. 8D).

However, in this method, for example, a difference in level, slippage, or deformation occurs on a surface of a film. Thus, problems, for example, a decrease in the accuracy of conductive film patterns formed in a patterning process, occurrence of cracks in, for example, a cleaning process, and occurrence of adhesion in a manufacturing unit, occur.

It is an object of the invention to provide a display unit manufacturing method for manufacturing a display unit and a display unit that can improve the accuracy of a conductive film pattern and avoid problems, for example, occurrence of cracks in, for example, a cleaning process and occurrence of adhesion in a manufacturing unit.

### SUMMARY

According to an aspect of an embodiment, a display unit manufacturing method for manufacturing a display unit comprises: forming a first resin film having a first electrode terminal and a first conductive film on one of surfaces of the first resin film, forming a second resin film having a second electrode terminal and a second conductive film on one of surfaces of the second resin film, arranging a display element on the first conductive film of the first resin film, arranging the second conductive film of the second resin film to the display element, forming a groove on another surface of the second resin film adjacent to the first electrode terminal, and tearing off a part of the second resin film along the groove so as to expose at least a part of the first electrode terminal.

Additional advantages and novel features of aspects of the present invention will be set forth in part in the description that follows, and in part will become more apparent to those skilled in the art upon examination of the following or upon learning by practice thereof.

### BRIEF DESCRIPTION OF THE DRAWINGS

Fig. 1A, Fig. 1B, and Fig. 1C show a method according to an embodiment of the invention for manufacturing a display unit;
Fig. 2A and Fig. 2B show problems with a related art;
Fig. 3A and Fig. 3B show the advantageous effects of the embodiment;
Fig. 4 is a cross-sectional view of the neighborhood of a part of a panel where electrodes are exposed;
Fig. 5 is a cross-sectional view of a unit that forms a groove in a film using a laser;
Fig. 6 is a cross-sectional view of a unit that forms a groove in a film using a cutting blade;
Fig. 7 is a cross-sectional view of a unit that forms a groove in a film using a grindstone; and

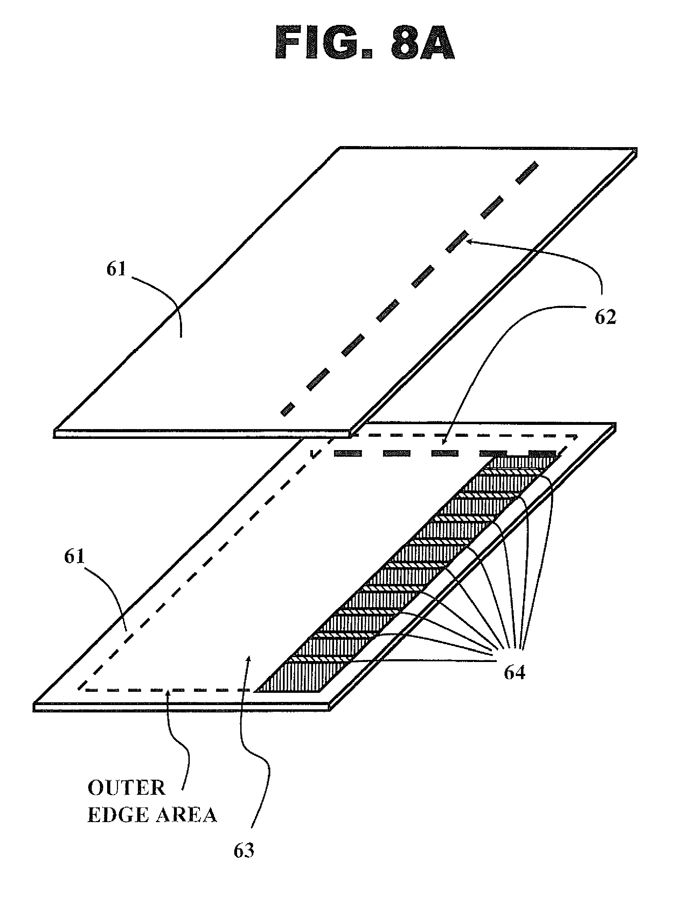

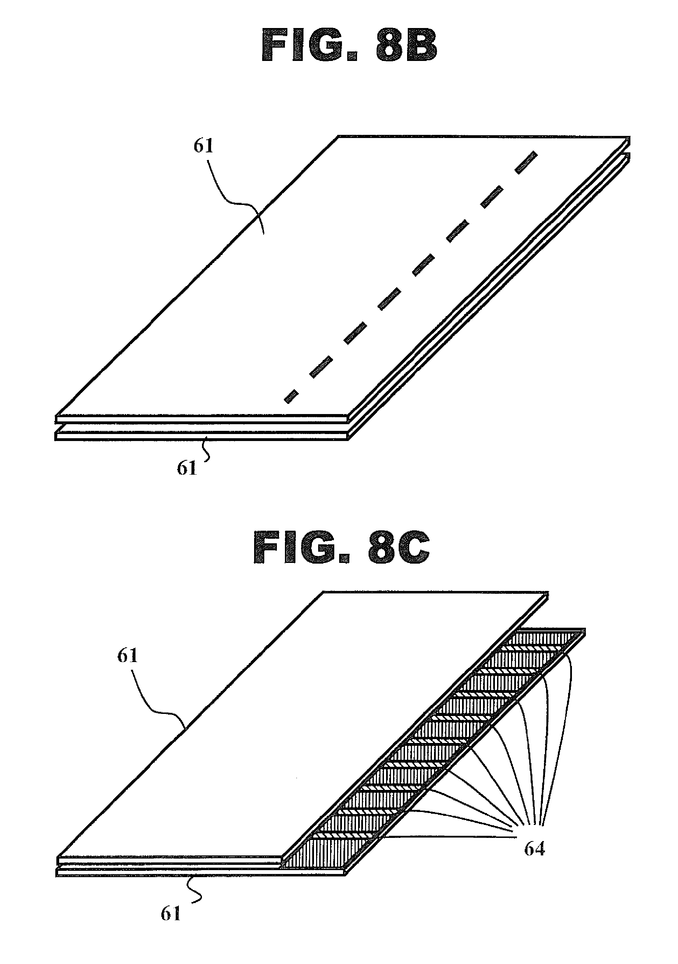

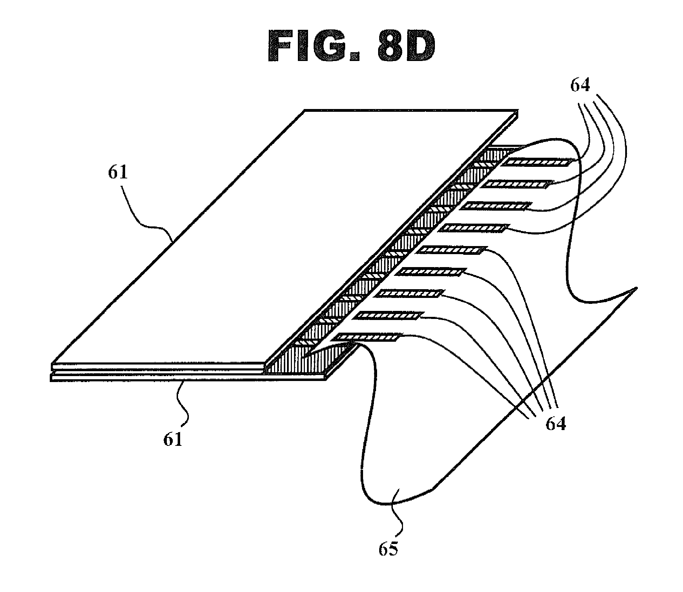

Fig. 8A, Fig. 8B, Fig. 8C, and Fig. 8D show a known method for manufacturing a display unit.

### DESCRIPTION OF THE PREFERRED EMBODIMENTS

Embodiments of the invention will now be described in detail with reference to the drawings.

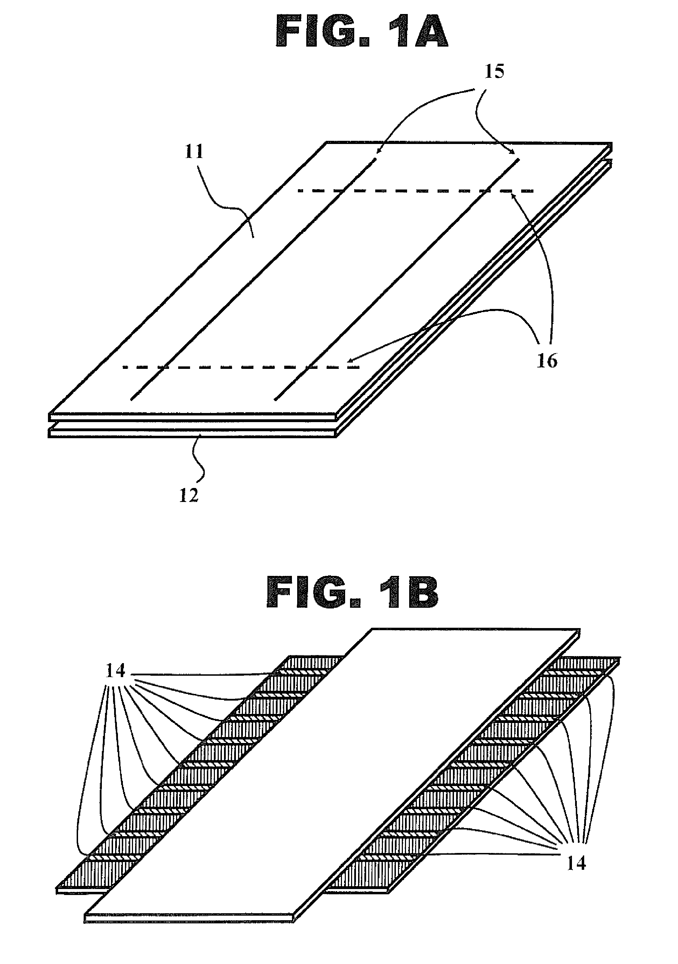

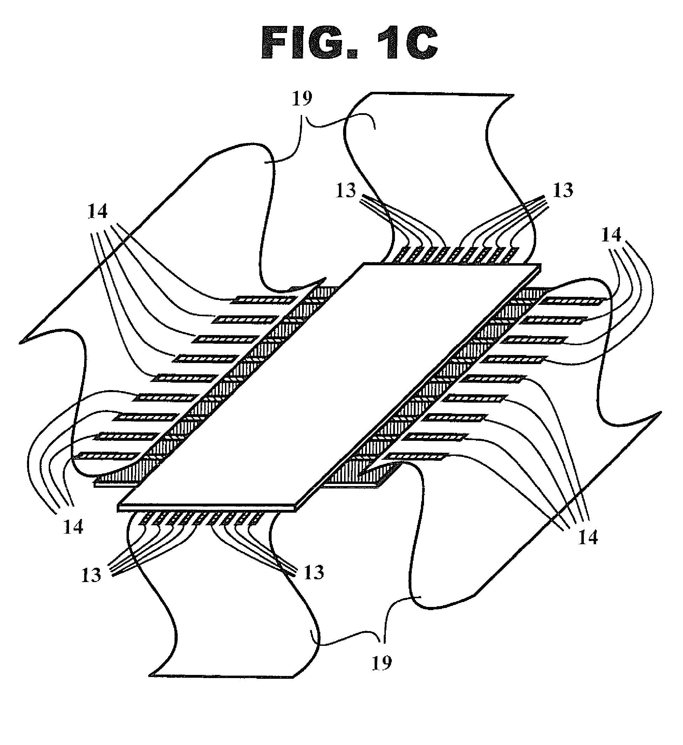

Fig. 1A, Fig. 1B, and Fig. 1C show a method according to an embodiment of the invention for manufacturing a display unit.

In Fig. 1A, Fig. 1B, and Fig. 1C, a first conductive film pattern as a pattern related to a display and first electrode terminals 13 are formed on a first surface of a first film 11. The first electrode terminals 13 extend in a direction in which the first conductive film pattern extends. The direction of the first conductive film pattern represents, for example, when the first conductive film pattern is a linear pattern that extends in a predetermined direction, the predetermined direction.

Moreover, a second conductive film pattern as a pattern related to a display and second electrode terminals 14 are formed on a first surface of a second film 12. The second electrode terminals 14 extend in a direction in which the second conductive film pattern extends. The direction of the second conductive film pattern represents, for example, when the second conductive film pattern is a linear pattern that extends in a predetermined direction, the predetermined direction.

A display element (in the case of electronic paper, for example, liquid crystal or a semiconductor, and in the case of organic electroluminescence (EL), for example, an organic self-luminous device) is formed on, for example, the first conductive film pattern on the first film 11, and the second conductive film pattern on the second film 12 is bonded to the first conductive film pattern so that the second conductive film pattern is in contact with the display element. In this manner, a panel in which the first conductive film pattern on the first film 11 and the second conductive film pattern on the second film 12 oppose each other and sandwich the display element is formed.

In this case, the direction of the first conductive film pattern on the first film 11 and the direction of the second conductive film pattern on the second film 12 intersect each other at, for example, right angles.

Then, grooves are formed in the panel. Specifically, second grooves 16 are provided in a second surface of the second film 12, opposite the first surface of the second film 12, on which the second conductive film pattern and the like are formed, adjacent to (near) the first electrode terminals 13 on the first film 11. The second grooves 16 extend in a direction orthogonal to the direction, in which the first conductive film pattern extends. In the drawing, since the second film 12 is concealed under the first film 11, the second grooves 16 provided in the second film 12 are indicated by broken lines.

Moreover, first grooves 15 are provided in a second surface of the first film 11, opposite the first surface of the first film 11, on which the first conductive film pattern and the like are formed, adjacent to (near) the second electrode terminals 14 on the second film 12. The first grooves 15 extend in a direction orthogonal to the direction, in which the second conductive film pattern extends.

Subsequently, in general, parts of the first film 11 and the second film 12 are manually cut out along the first grooves 15 and the second grooves 16, respectively, so that the first electrode terminals 13 on the first film 11 and the second electrode terminals 14 on the second film 12 are exposed to intersect each other at right angles.

Subsequently, FPC connectors 19 are bonded to the first electrode terminals 13 and the second electrode terminals 14, which have been exposed, so that the first electrode terminals 13 and the second electrode terminals 14 are connected to respective drive circuits (not shown).

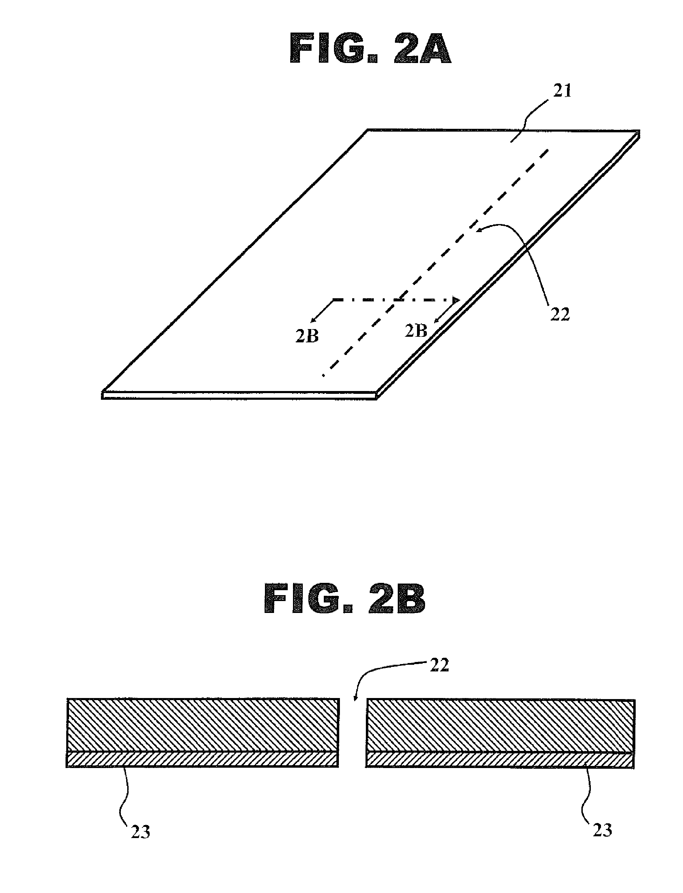

In the method disclosed in Japanese Laid-open Patent Publication No. 59-37524, a perforated line 22 (a broken line that includes a plurality of through-holes) is formed on a film 21, as shown in Fig. 2A and Fig. 2B. In this arrangement, for example, a difference in level, slippage, or deformation occurs on a surface of the film 21. Thus, problems, for example, a decrease in the accuracy of a conductive film pattern 23 formed in a patterning process, occurrence of cracks in, for example, a cleaning process, and occurrence of adhesion in a manufacturing unit, occur.

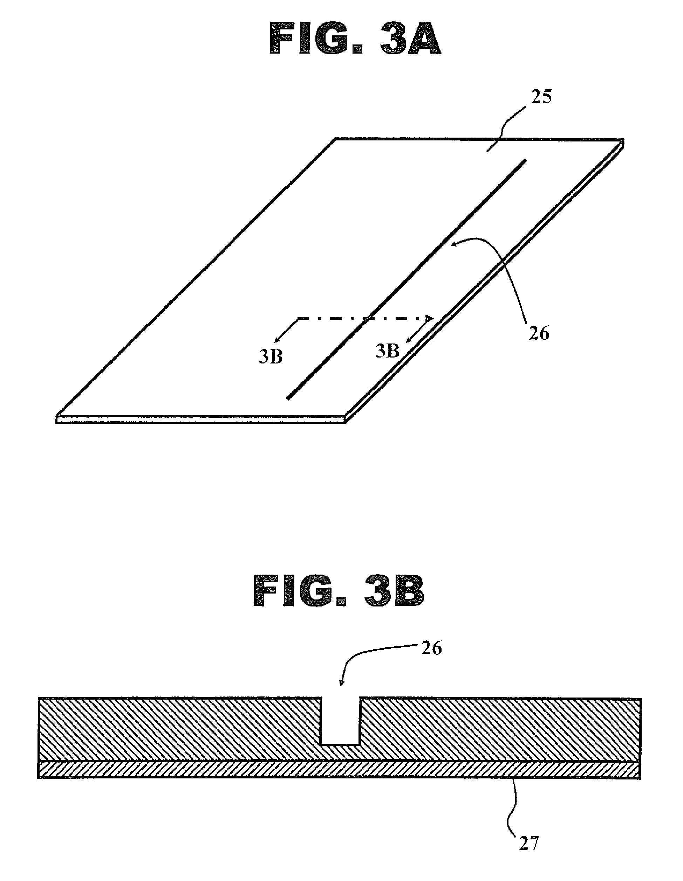

In contrast, in the present embodiment, since a groove 26 does not penetrate a film 25, as shown in Fig. 3A and Fig. 3B, any difference in level, slippage, or deformation does not occur on a surface of the film 25. Thus, the accuracy of a conductive film pattern 27 is improved, so that problems, for example, occurrence of cracks in, for example, a cleaning process and occurrence of adhesion in a manufacturing unit, can be avoided. In this case, the groove 26 according to the present embodiment does not include any through-hole that extends in the thickness direction of the film 25 and thus is distinguished from the perforated line in the related art.

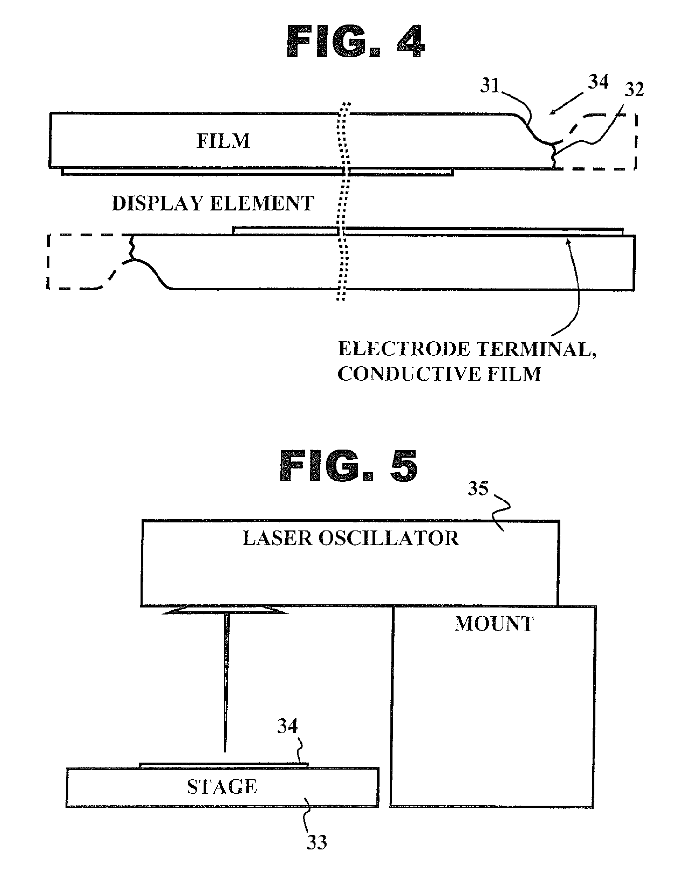

Fig. 4 is a cross-sectional view of the neighborhood of parts of a panel where electrodes are exposed. The panel is manufactured by the manufacturing method shown in Fig. 1A, Fig. 1B, and Fig. 1C.

When a film is cut along a groove 34, a melted surface 31 and a tore off surface 32 appear on a side surface of the film. The melted surface 31 appears on the side opposite the side of a display element on the film.

The melted surface 31 is a part that constituted the groove 34. A unit described below that forms a groove in a film using a laser forms the groove 34 in the film. The groove 34 in the film is, for example, V-shaped, U-shaped, or concave. In a case where the groove 34 is formed using a grindstone, a ground surface corresponds to the melted surface 31, as described below. The tore off surface 32 appears on the side of the display element on the film.

When the depth of a groove provided in a film is too small, the film cannot be successfully cut. When the depth of the groove is too large, heat generated when the groove is formed damages a conductive film pattern formed on a first surface of the film, opposite a second surface of the film in which the groove is formed. That is to say, it is preferable that the depth of a groove provided in a film be large enough to successfully cut the film and small enough not to damage a conductive film pattern formed on a first surface of the film, opposite a second surface of the film in which the groove is formed.

In the foregoing description, a groove is formed after a panel is formed. Alternatively, a groove may be formed before a conductive film (including a conductive film pattern and an electrode pattern formed at outer edges of the conductive film pattern) is formed on each film. In this case, a conductive film pattern can be prevented from being damaged by heat generated when a groove is formed.

In this case, a display unit is manufactured by the following method: Grooves are formed in positions to be cut on a first surface of each of first and second films that need to oppose each other, a conductive film pattern is formed on a second surface of the first film, opposite the first surface of the first film, electrode terminals are formed at positions on outer edges of the conductive film pattern, the positions being adjacent to (near) the grooves formed in the second film when the first and second films are bonded together, and then a display element is formed on the conductive film pattern on the first film.

Moreover, a conductive film pattern is formed on a second surface of the second film, opposite the first surface of the second film, electrode terminals are formed at positions on outer edges of the conductive film pattern, the positions being adjacent to (near) the grooves formed in the first film when the first and second films are bonded together, and then the conductive film pattern on the second film is bonded to the display element so as to be in contact with the display element.

Then, parts of the second film are cut out along the formed grooves to expose at least a part of each of the electrode terminals on the first film, and parts of the first film are cut out along the formed grooves to expose at least a part of each of the electrode terminals on the second film.

Fig. 5 is a cross-sectional view of a unit that forms a groove in a film using a laser.

In Fig. 5, a film 34 (or a panel that includes bonded films) is sucked to be aligned on a stage 33. In this state, a surface to be machined (a surface in which a groove is formed) of the film 34 is disposed so as to oppose a laser oscillator 35.

A laser beam emitted onto the film 34 from the laser oscillator 35 scans a position to be cut on the film 34, so that a groove is formed in the film 34. In this case, the depth, width, and cross-sectional shape of a groove to be formed can be controlled by controlling, for example, the laser output power, the pulse width, the scanning speed, and the throw distance.

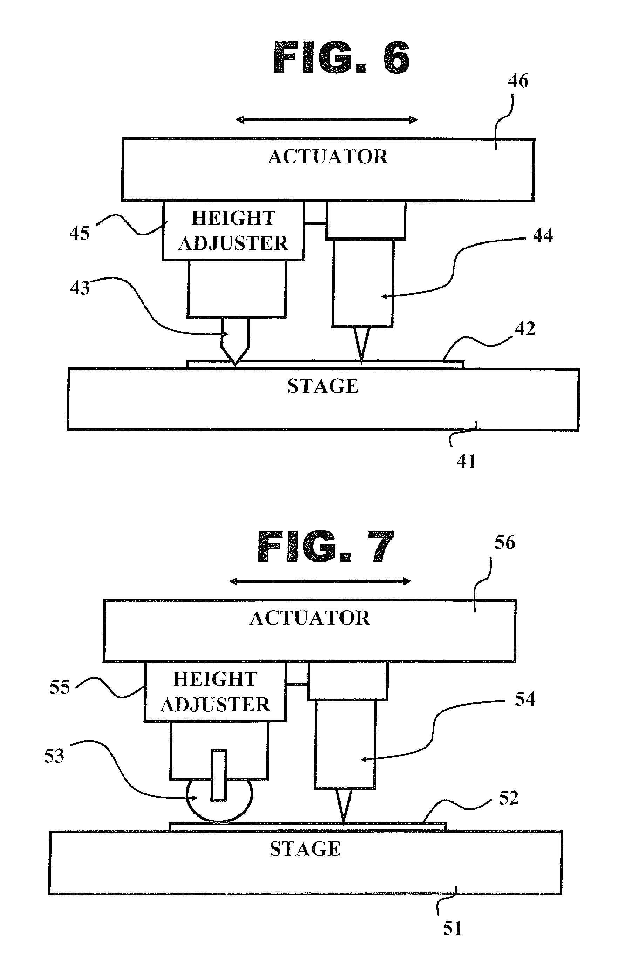

Fig. 6 is a cross-sectional view of a unit that forms a groove in a film using a cutting blade.

In Fig. 6, a film 42 (or a panel that includes bonded films) is sucked to be aligned on a stage 41, and a surface to be machined (a surface in which a groove is formed) of the film (or panel) 42 is held using a jig (not shown). In this state, the surface to be machined is disposed so as to oppose a cutting blade 43.

A laser displacement meter 44 measures the flatness of the surface to be machined, i.e., the deformation of the film (or panel) 42, in a non-contact manner. Then, while a height adjuster 45 adjusts, on the basis of the result of the measurement, the length of the protruding portion of the cutting blade 43 so as to achieve a constant depth of a groove, the cutting blade 43 is moved above the stage 41 by an actuator 46, so that a groove is formed in a position to be cut on the film 42. In this case, the depth, width, and cross-sectional shape of a groove to be formed can be controlled by controlling, for example, the length of the protruding portion of the blade, the position of the cutting edge, the pressing force, and the movement speed.

Fig. 7 is a cross-sectional view of a unit that forms a groove in a film using a grindstone.

In Fig. 7, a film 52 (or a panel that includes bonded films) is sucked to be aligned on a stage 51, and a surface to be machined (a surface in which a groove is formed) of the film (or panel) 52 is held using a jig (not shown). In this state, the surface to be machined is disposed so as to oppose a grindstone 53.

A laser displacement meter 54 measures the flatness of the surface to be machined, i.e., the deformation of the film (or panel) 52, in a non-contact manner. Then, while a height adjuster 55 adjusts, on the basis of the result of the measurement, the length of the protruding portion of the grindstone 53 so as to achieve a constant depth of a groove, the grindstone 53 is moved above the stage 51 by an actuator 56, so that a groove is formed in a position to be cut on the film 52. In this case, the depth, width, and cross-sectional shape of a groove to be formed can be controlled by controlling, for example, the length of the protruding portion of the grindstone, the pressing force, and the movement speed.

A method according to a first aspect for manufacturing a display unit includes forming a display element on a first conductive film pattern of a first resin film that includes a first electrode terminal and the first conductive film pattern on one surface thereof, bonding, to the display element, a second conductive film pattern of a second resin film that includes a second electrode terminal and the second conductive film pattern on one surface thereof so that the second conductive film pattern is contact with the display element, forming a second groove in a position on the second resin film adjacent to (near) the first electrode terminal, and tearing off (removing) a part of the second resin film along the second groove to expose at least a part of the first electrode terminal.

The method according to the first aspect may further include forming a first groove in a position on the first resin film adjacent to (near) the second electrode terminal, and tearing off (removing) a part of the first resin film along the first groove to expose at least a part of the second electrode terminal.

A method according to a second aspect for manufacturing a display unit includes forming a first groove in a position to be cut on one surface of a first resin film and a second groove in a position to be cut on one surface of a second resin film. The first and second resin films need to oppose each other. The method further includes forming, on another surface of the first resin film, opposite the one surface of the first resin film, a first conductive film pattern and a first electrode terminal at a position, on an outer edge of the first conductive film pattern, to be adjacent to (near) the second groove, forming a display element on the first conductive film pattern, forming, on another surface of the second resin film, opposite the one surface of the second resin film, a second conductive film pattern and a second electrode terminal at a position, on an outer edge of the second conductive film pattern, to be adjacent to (near) the first groove, bonding the second conductive film pattern to the display element so that the second conductive film pattern is in contact with the display element, tearing off (removing) a part of the second resin film along the second groove to expose at least a part of the first electrode terminal, and tearing off (removing) a part of the first resin film along the first groove to expose at least a part of the second electrode terminal.

In this case, since the second groove formed in the second resin film does not penetrate the second resin film, unlike the method shown in Japanese Laid-open Patent Publication No. 59-37524, in which a plurality of through-holes that penetrate a resin film constitute a broken line (a perforated line), any difference in level, slippage, or deformation does not occur on a surface of a resin film. Moreover, a decrease in the accuracy of a conductive film pattern formed in a patterning process and problems, for example, occurrence of cracks in, for example, a cleaning process and occurrence of adhesion in a manufacturing unit, can be avoided.

According to the embodiment, any difference in level, slippage, or deformation does not occur on a surface of a resin film, the accuracy of a conductive film pattern is improved, and problems, for example, occurrence of cracks in, for example, a cleaning process and occurrence of adhesion in a manufacturing unit, can be avoided.

Although a few preferred embodiments have been shown and described, it would be appreciated by those skilled in the art that changes may be made in these embodiments without departing from the principles and spirit of the invention, the scope of which is defined in the claims and their equivalents.

## Claims

1. A display unit manufacturing method for manufacturing a display unit, the method comprising:
forming a first resin film (11) having a first electrode terminal (13) and a first conductive film on one of surfaces of the first resin film;
forming a second resin film (12) having a second electrode terminal (14) and a second conductive film on one of surfaces of the second resin film;
arranging a display element on the first conductive film of the first resin film;
arranging the second conductive film of the second resin film to the display element;
forming a groove (16) on another surface of the second resin film adjacent to the first electrode terminal; and
tearing off a part of the second resin film along the groove so as to expose at least a part of the first electrode terminal.

2. The display unit manufacturing method according to claim 1, further comprising the steps of:
forming a second groove (15) on another surface of the first resin film adjacent to the second electrode terminal; and
tearing off a part of the second resin film along the second groove so as to expose at least a part of the second electrode terminal.

3. A display unit manufacturing method for manufacturing a display unit, the method comprising the steps of:
forming a first groove on one of surfaces of a first resin film;
forming a second groove on one of surface of a second resin film;
forming a first conductive film on another surface of the first resin film;
forming a first electrode terminal adjacent to a position to be arranged the second groove;
arranging a display element on the first conductive film of the first resin film;
forming a second conductive film on another surface of the second resin film;
forming a second electrode terminal adjacent to a position to be arranged the first groove;
arranging the second conductive film of the second resin film on the display element;
tearing off a part of the second resin film along the second groove so as to expose at least a part of the first electrode terminal; and
tearing off a part of the first resin film along the first groove so as to expose at least a part of the second electrode terminal.

4. The display unit manufacturing method according to claim 1, wherein the first electrode terminal and the second electrode terminal do not overlap each other, as viewed in a direction in which the first resin film and the second resin film are bonded.

5. The display unit manufacturing method according to claim 1, wherein the step of forming the groove forms the depth, width, and shape of the groove by using a laser.

6. The display unit manufacturing method according to Claim 1, wherein the step of forming the groove forms the depth, width, and shape of the groove by using a grinder,

7. A display unit comprising:
a first resin film (11) having a first surface;
a first conductive film having an edge and arranged on the first surface;
a first electrode terminal (13) arranged on the first surface;
a second resin film (12) having a second surface;
a second conductive film having an edge and arranged on the second surface;
a second electrode terminal (14) arranged on the second surface; and
a display element arranged between the first conductive film and the second conductive film,
a portion having the first electrode terminal of the first resin film, the portion exposed from the display element and
the second resin film.
